# EUROPÄISCHE PATENTSCHRIFT

(11) **EP 3 749 928 B1**
(45) Veröffentlichungstag und Bekanntmachung des Hinweises auf die Patenterteilung: **16.03.2022**
(21) Anmeldenummer: 19704719.4
(22) Anmeldetag: 15.01.2019
(51) Int. Cl.: G01C 21/32, G09B 29/10

(54) **AKTUALISIERUNG EINER GEOGRAPHISCHEN KARTE**
UPDATING A GEOGRAPHIC MAP
ACTUALISATION D'UNE CARTE GÉOGRAPHIQUE

(30) Priorität: 07.02.2018 DE 102018201889
(43) Veröffentlichungstag der Anmeldung: 16.12.2020
(73) Patentinhaber: Bayerische Motoren Werke Aktiengesellschaft, 80809 München (DE)
(72) Erfinder: HERRERO, Mariano, 81377 München (DE)
(86) Internationale Anmeldenummer: PCT/DE2019/100030
(87) Internationale Veröffentlichungsnummer: WO 2019/154457

(56) Entgegenhaltungen:
- EP-A1- 2 626 668
- DE-A1-102006 013 297
- US-A1- 2007 282 524
- US-A1- 2015 310 038

## Beschreibung

Die Erfindung betrifft die Aktualisierung einer geographischen Karte. Insbesondere betrifft die Erfindung die Aktualisierung einer geographischen Karte, die zur Steuerung eines Kraftfahrzeugs eingerichtet ist.

Ein Kraftfahrzeug kann auf der Basis einer geographischen Karte automatisch oder teilautomatisch gesteuert werden. Die geographische Karte soll regelmäßig aktualisiert werden, um die Steuerung auf der Basis möglichst aktueller Kareninformationen durchführen zu können. Dabei ist die Karte in Kacheln unterteilt, die jeweils ein vorbestimmtes geographisches Gebiet betreffen. Eine Aktualisierung der Karte wird üblicherweise durchgeführt, indem Informationen, die eine oder mehrere der Kacheln betreffen, aktualisiert werden. Informationen anbetroffener Kacheln werden unverändert beibehalten.

Zur Erhöhung der Steuersicherheit eines Kraftfahrzeugs auf der Basis der Karte werden die zu ändernden Informationen vor dem Aktualisieren der Karte überprüft, beispielsweise mittels eines Vergleichs mit Informationen aus anderen Quellen oder mittels Prüfung auf Konsistenz zwischen den Informationen. Wird dabei ein Fehler festgestellt, können nur die Informationen der primär betroffenen Kachel verworfen. Dabei kann sich allerdings eine Inkonsistenz zwischen einer geänderten und einer nicht geänderten Kachel ergeben. Zur Sicherung der Konsistenz der Karte können alternativ alle aktualisierten Informationen verworfen werden. Bis zur Bereitstellung einer fehlerfreien Aktualisierung kann eine längere Zeit vergehen, sodass die Karte in der Zwischenzeit stellenweise veraltet sein kann.

US 2015 0310 038 A1 betrifft eine Technik zur Verwaltung von Kartendaten einer digitalen Karte für eine Navigationsvorrichtung.

EP 2 626 668 A1 beschreibt eine Vorgehensweise, um eine Aktualisierung einer digitalen Karte zu prüfen.

DE 10 2006 013 297 B4 zeigt ein Verfahren zum Betrieb eines Navigationssystems, insbesondere für ein Kraftfahrzeug, auf.

US 2007 0 282 524 A1 schlägt ein Computerprogrammprodukt und ein Navigationssystem vor, um eine befahrbare Route zwischen einer aktuellen Position und einer vorbestimmten Zielposition auf einem Straßennetz zu bestimmen. Dabei können die Straßen unterschiedliche Kategorien aufweisen. Eine der Erfindung zu Grunde liegende Aufgabe besteht darin, eine verbesserte Technik zur Aktualisierung einer geographischen Karte anzugeben. Die Erfindung löst diese Aufgabe mittels der Gegenstände der unabhängigen Ansprüche. Unteransprüche geben bevorzugte Ausführungsformen wieder.

Eine geographische Karte, insbesondere als Basis für die Steuerung eines Kraftfahrzeugs, umfasst eine Vielzahl erster Kacheln, wobei jede erste Kachel Informationen bezüglich eines vorbestimmten geographischen Gebiets enthält.

Nach einem ersten Aspekt der vorliegenden Erfindung umfasst ein Verfahren zum Aktualisieren der Karte Schritte des Erfassens einer Sammlung von zweiten Kacheln, wobei jeder zweiten Kachel eine erste Kachel zugeordnet ist und die zweite Kachel geänderte Informationen bezüglich des geographischen Gebiets der zugeordneten ersten Kachel enthält; des Bestimmens und Verwerfens einer zweiten Kachel, die fehlerhafte Informationen enthält; des rekursiven Verwerfens aller zweiten Kacheln, deren geographische Gebiete an das geographische Gebiet einer verworfenen zweiten Kachel angrenzen, und des Aktualisierens der geographischen Karte auf der Basis von Informationen verbleibender zweiter Kacheln.

Informationen einer zweiten Kachel sollen Informationen einer zugeordneten ersten Kachel ersetzen, wobei geographische Gebiete, auf die sich die beiden Kacheln beziehen, bevorzugt deckungsgleich sind. Erfindungsgemäß sollen bei Festellen eines Fehlers an den Informationen einer zweiten Kachel nicht nur die Informationen dieser zweiten Kachel, sondern auch die der daran angrenzenden zweiten Kacheln verworfen werden, und die der an diese zweiten Kacheln angrenzenden zweiten Kacheln und so fort. Dadurch kann sichergestellt werden, dass die aktualisierte Karte in sich konsistent ist und insbesondere keine aneinander angrenzenden Kacheln enthält, deren Informationen einander widersprechen bzw. nicht zusammen passen.

Sollen beispielsweise Informationen über eine Autobahn, die sich über die geographischen Gebiete mehrerer Kacheln erstreckt, aktualisiert werden, so betrifft die Änderung alle Kacheln, in deren zugeordneten geographischen Gebieten sich jeweils ein Abschnitt der Autobahn erstreckt. Die Sammlung zweiter Kacheln enthält daher eine Menge von zweiten Kacheln, deren geographische Gebiete zusammenhängen und die jeweils einen Abschnitt der Autobahn enthalten. Wird in den Informationen einer der Kacheln dieser Menge ein Fehler erkannt, werden die Informationen aller zweiten Kacheln der Menge verworfen. Die geographische Korrelation der Kacheln kann so vorteilhaft ausgenutzt werden, um eine Fortpflanzung eines Fehlers über die zweiten Kacheln zu bestimmen. Informationen einer weiteren zweiten Kachel, die vom geographischen Gebiet der Autobahn bzw. der Teilmenge entfernt liegt, sind vom entdeckten Fehler jedoch nicht betroffen, sodass deren Informationen übernommen werden können.

Dadurch kann erreicht werden, dass einerseits die Konsistenz der Karte gesichert ist, und andererseits möglichst viele der Informationen der zweiten Kacheln übernommen werden, um eine rasche Aktualisierung zu erlauben. Die Aktualität der Karte kann entscheidend für ihre Tauglichkeit zur Führung eines Kraftfahrzeugs sein, insbesondere wenn das Kraftfahrzeug vollautomatisch bzw. autonom gesteuert wird.

Das geographische Gebiet einer zweiten Kachel kann mit dem geographischen Gebiet der zugeordneten ersten Kachel übereinstimmen. Dadurch kann eine Zuordnung zwischen ersten und zweiten Kacheln vereinfacht sein. Insbesondere kann eine bijektiv Abbildung verwendet werden, die einen Vergleich von Informationen zwischen zwei Kacheln in beiden Richtungen erleichtert.

In einer bevorzugten Ausführungsform wird ein Hinweis auf eine verworfene zweite Kachel bereitgestellt. Der Hinweis kann insbesondere an eine Quelle der Sammlung bereitgestellt werden. Der Hinweis kann eine oder mehrere Informationen umfassen, die als fehlerhaft bestimmt wurden. Die Quelle der zweiten Kachel kann den Fehler dann beheben und eine korrigierte Version der betroffenen zweiten Kacheln bereitstellen.

Die geographischen Gebiete der zweiten Kacheln können schachbrettartig angeordnet sein, wobei zwei diagonal versetzte zweite Kacheln als aneinander angrenzend angesehen werden. Dadurch können auch Fälle, bei denen sich ein von einer Information einer zweiten Kachel betroffenes Objekt zwischen zwei diagonal versetzten zweiten Kacheln erstreckt, verbessert berücksichtigt werden. Die unverworfenen zweiten Kacheln können dadurch verbessert konsistent miteinander sein.

In einer weiteren Ausführungsform können auch zweite Kacheln, die innerhalb eines vorbestimmten Abstands von einer verworfenen zweiten Kachel liegen, verworfen werden. Insbesondere dann, wenn die zweiten Kacheln dünn über die Fläche der Karte verteilt sind, können durch diese Maßnahme vorsorglich weitere Informationen verworfen werden, die mit einer fehlerhaften Information in Verbindung stehen könnten.

Ausführungsformen der Erfindung können vorsehen, dass die einer zweiten Kachel zugeordneten Informationen lediglich Änderungen betreffen. Informationen, die sich zwischen einer ersten Kachel und der zugeordneten zweiten Kachel nicht ändern, müssen so nicht mehr übermittelt werden. Allerdings sollte dann seitens der Quelle der Sammlung bekannt sein, in welcher Version eine erste Kachel vorliegt, um die korrekten Änderungen bestimmen zu können.

Weiter vorzugsweise betreffen die einer zweiten Kachel zugeordneten Informationen alle vorhandenen Informationen des zugeordneten geographischen Gebiets. Dadurch werden zwar potentiell redundante Informationen vom Dienstleister zur zentralen Einrichtung übermittelt, andererseits muss keine Versionierung der Informationen der ersten Kacheln stattfinden bzw. seitens des Dienstleisters muss die Version einer bei der zentralen Einrichtung vorliegenden ersten Kachel nicht bekannt sein, um eine zugeordnete zweite Kachel mit geänderten Informationen zu versehen.

Fehlerhafte Informationen der zweiten Kachel können auf der Basis einer syntaktischen Struktur der Informationen, eines Formats der zweiten Kachel, einer Relation der Informationen zu Informationen einer angrenzenden ersten oder zweiten Kachel, eines Vergleichs von Informationen mit der Realität oder mittels Vergleich der Informationen mit Informationen aus einer anderen Quelle bestimmt werden. Dadurch kann eine unabhängige Prüfung der Informationen durchgeführt werden, um die Qualität der in der Karte enthaltenen Informationen weiter zu steigern.

In einer Weiterentwicklung des Verfahrens werden Informationen eines Umfelds einer vorbestimmten geographischen Position abgetastet und mit Informationen einer die Position umfassenden ersten Kachel verglichen. Insbesondere kann ein Ausschnitt der Karte der zentralen Einrichtung an ein Kraftfahrzeug übermittelt werden, wo das Abtasten und Vergleichen dann stattfindet. Das Kraftfahrzeug kann so die Informationen einer ersten Kachel der Karte überprüfen und gegebenenfalls eine Abweichung an die zentrale Einrichtung oder den Dienstleister zurückmelden.

Auf der Basis der Informationen der ersten Kachel und den abgetasteten Informationen können ferner Steuersignale für ein Kraftfahrzeug bereitgestellt werden. Das Kraftfahrzeug kann auf der Basis der Informationen insbesondere in Längs- und/oder Querrichtung gesteuert werden. Die Steuerung kann in unterschiedliche Autonomieklassen fallen und auch eine vollständig autonome Steuerung betreffen.

Eine Vorrichtung zur Aktualisierung der oben genannten einer geographischen Karte umfasst eine Schnittstelle zur Erfassung einer Sammlung von zweiten Kacheln, wobei jeder zweiten Kachel eine erste Kachel zugeordnet ist und die zweite Kachel geänderte Informationen bezüglich des geographischen Gebiets der zugeordneten ersten Kachel enthält; eine Verarbeitungseinrichtung, die dazu eingerichtet ist, eine zweite Kachel, die fehlerhafte Informationen enthält, zu bestimmen, die bestimmte zweite Kachel zu verwerfen; und die geographische Karte auf der Basis von Informationen verbleibender zweiter Kacheln zu aktualisieren. Dabei ist die Verarbeitungseinrichtung ferner dazu eingerichtet, vor dem Aktualisieren rekursiv alle zweiten Kacheln zu verwerfen, deren geographische Gebiete an das geographische Gebiet einer verworfenen zweiten Kachel angrenzen, zu verwerfen.

Die Vorrichtung kann insbesondere zur Durchführung eines hierin beschriebenen Verfahrens eingerichtet sein. Dazu kann Verarbeitungseinrichtung einen programmierbaren Mikrocomputer umfassen und das Verfahren kann als Computerprogrammprodukt vorliegen. Vorteile und Merkmale des Verfahrens können auf die Vorrichtung übertragen werden und umgekehrt.

Die Erfindung wird nun mit Bezug auf die beigefügten Zeichnungen genauer beschrieben, in denen
- Figur 1: ein System mit einem Kraftfahrzeug, das auf der Basis einer geographischen Karte gesteuert werden kann;
- Figur 2: ein Ablaufdiagramm eines Verfahrens zum Aktualisieren einer geographischen Karte; und
- Figur 3: eine schematische Aktualisierung einer Karte illustriert.

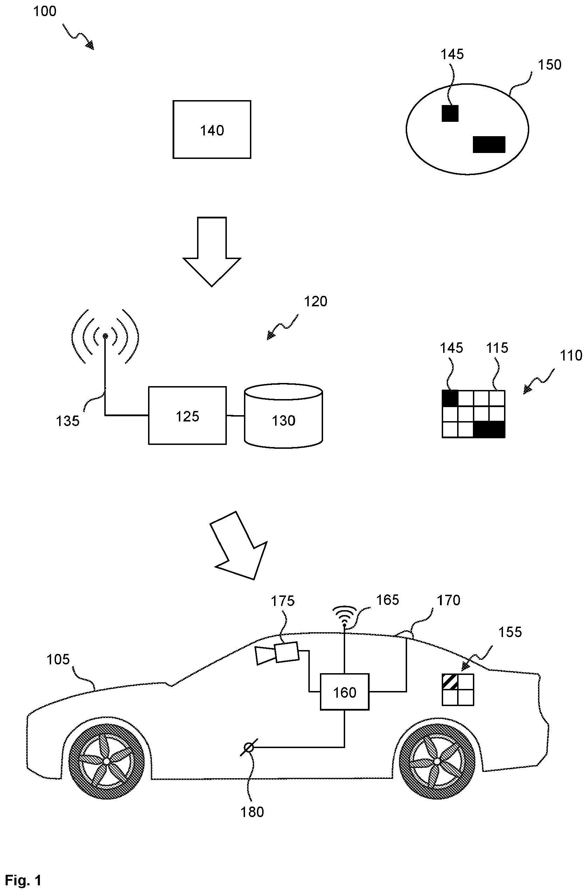

Fig. 1 zeigt ein System 100 mit einem Kraftfahrzeug 105, das auf der Basis einer geographischen Karte 110 gesteuert werden kann, die in erste Kacheln 115 unterteilt ist. Jeder ersten Kachel 115 ist ein vorbestimmter geographischer Bereich zugeordnet. Jede erste Kachel 115 kann geographische Informationen enthalten, beispielsweise die Führung eines Verkehrswegs, die Lage eines Parkplatzes oder einer Sehenswürdigkeit. Es können auch dynamische Informationen wie eine Fließgeschwindigkeit des Verkehrs auf einer Straße oder legale Informationen wie ein Überholverbot oder eine Geschwindigkeitsbeschränkung auf der Straße von den Informationen umfasst sein. Die Karte 110 kann insbesondere als hochgenaue Karte bezeichnet werden.

Die ersten Kacheln 115 decken ein vorbestimmtes geographisches Darstellungsgebiet der Karte 110 bevorzugt vollständig ab, sodass kein Bereich der Karte besteht, der nicht einer ersten Kachel 115 zugeordnet ist. Weiter bevorzugt sind die geographischen Gebiete der ersten Kacheln 115 disjunkt, sodass jeder Punkt des Darstellungsgebiets dem geographischen Gebiet genau einer ersten Kachel 115 zugeordnet ist. Alternativ kann auch eine vorbestimmte Überlappung der einzelnen ersten Kacheln 115 vorgesehen sein. Die ersten Kacheln 115 sind bevorzugt rechteckig und können Kantenlängen von beispielsweise ca. 2 km * 2 km aufweisen. Die Erdkrümmung oder andere geodätische Abweichungen können durch eine geeignete Kartenprojektion oder eine andere Korrektur berücksichtigt werden.

Die Karte 110 liegt in ihrer Gesamtheit bevorzugt an einer zentralen Einrichtung 120 vor, die eine Verarbeitungseinrichtung 125, einen Datenspeicher 130 sowie weiter bevorzugt eine Schnittstelle 135 umfasst, die zur drahtlosen Kommunikation mit dem Kraftfahrzeug 105 eingerichtet ist. Die zentrale Einrichtung 120 kann insbesondere als Server oder als Dienst, bevorzugt abstrahiert in einer Cloud, realisiert sein. In einer weiteren Ausführungsform kann die zentrale Einrichtung 120 auch mit dem Dienstleister 140 integriert sein oder auch entfallen. Die Karte 110 kann regelmäßig auf der Basis neuer Informationen aktualisiert werden. Die neuen Informationen werden üblicherweise von einem Dienstleister 140 bereitgestellt. Aktualisierungen können zeit- oder ereignisgesteuert durchgeführt werden und durchschnittlich im Stundenrhythmus oder in Abständen von einigen Minuten erfolgen. Noch häufigere oder auch weniger häufige Aktualisierungen sind ebenfalls möglich.

Zur Aktualisierung bestimmt der Dienstleister 140 üblicherweise diejenigen ersten Kacheln 115, deren geographischen Gebieten die zu ändernden Informationen zugeordnet sind. Die Informationen beiziehen sich üblicherweise auf Objekte, die eine Ausdehnung größer null haben, sodass sich die Informationen auf mehrere erste Kacheln 115 beziehen können, insbesondere wenn das Objekt die Grenze zwischen wenigstens zwei ersten Kacheln 115 überdeckt. Jeder ersten Kachel 115 ist eine zweite Kachel 145 zugeordnet, wobei die geographischen Gebiete der einander zugeordneten Kacheln 115, 145 sich zumindest überlappen, bevorzugt vollständig miteinander übereinstimmen. Die zu aktualisierenden Informationen werden in einer zweiten Kachel 145 abgespeichert und mehrere zweite Kacheln 145 werden zu einer Sammlung 150 zusammengefügt. Die Sammlung 150 umfasst bevorzugt alle zweiten Kacheln 145, die von geänderten Informationen betroffen sind. Erstreckt sich das Objekt beispielsweise über eine Anzahl N geographischer Gebiete zweiter Kacheln 145, so umfasst die Sammlung 150 eine Untermenge, auch Set genannt, dieser N zweiten Kacheln 145. Üblicherweise werden alle zweiten Kacheln 145 in einer Sammlung 150 gruppiert, die Informationen umfassen, deren Änderungen innerhalb eines vorbestimmten Zeitabschnitts bestimmt wurden. Üblicherweise sind daher nicht alle zweiten Kacheln 145 der Sammlung 150 über eine gemeinsame zu aktualisierende Information miteinander verbunden.

Die Sammlung 150 der zweiten Kacheln 145 wird seitens der zentralen Einrichtung 120 ausgewertet. Dabei werden zunächst die in den zweiten Kacheln 145 enthaltenen Informationen überprüft, beispielsweise auf Plausibilität, Übereinstimmung mit anderen Informationen oder Widerspruchsfreiheit untereinander. Als fehlerhaft befundene zweite Kacheln145 können verworfen werden. Die Informationen der restlichen zweiten Kacheln 145 können dann zur Aktualisierung der Karte 110 verwendet werden.

An Bord des Kraftfahrzeugs 105 ist üblicherweise jeweils nur eine Teilkarte 155 aktuell vorgehalten, wobei die Teilkarte 155 bevorzugt eine augenblickliche Position des Kraftfahrzeugs 105 enthält. Die Teilkarte 155 umfasst mehrere erste Kacheln 115. Wird eine der Kacheln 115, die an Bord des Kraftfahrzeugs 105 gespeichert ist, bei der zentralen Einrichtung 120 aktualisiert, so können entsprechende Änderungsinformationen in Form einer oder mehrerer zweiter Kacheln 145 an das Kraftfahrzeug 105 übermittelt werden, wo eine bestehende erste Kachel 115 auf der Basis der Informationen einer zugeordneten zweiten Kachel 145 aktualisiert werden kann.

Das Kraftfahrzeug 105 umfasst eine Steuervorrichtung 160, die bevorzugt mit einer Schnittstelle 165 zur drahtlosen Kommunikation mit der zentralen Einrichtung 120 eingerichtet ist. Die Steuervorrichtung 160 ist zum Empfangen einer zweiten Kachel 145 und zum Aktualisieren einer korrespondierenden ersten Kachel 115 eingerichtet. Ferner kann die Steuervorrichtung 160 dazu eingerichtet sein, eine Steueraufgabe an Bord des Kraftfahrzeugs 105 auszuführen. Die Steueraufgabe kann insbesondere eine Längs- und/oder Quersteuerung des Kraftfahrzeugs 105 betreffen. Die Steuervorrichtung 160 kann mit einer Positioniereinrichtung 170, die insbesondere einen Empfänger eines satellitengestützten Navigationssystems umfassen kann, sowie wenigstens einem Sensor 175 zur Abtastung eines Umfelds des Kraftfahrzeugs 105 verbunden sein. Die Steuerung kann durch Bereitstellung entsprechender Signale über eine Schnittstelle 180 erfolgen. Über die Schnittstelle 180 können auch Fahr- oder Steuerungsparameter an Bord des Kraftfahrzeugs 105 abgetastet werden.

Die Steuervorrichtung 160 ist bevorzugt dazu eingerichtet, das Kraftfahrzeug in Abhängigkeit von Informationen des Sensors 175 sowie von weiteren Informationen zu steuern, die in ersten oder zweiten Kacheln 115, 145 der Teilkarte 155 enthalten sind. Karteninformationen können insbesondere die Begrenzung einer Straße, die Position eines Hindernisses oder Informationen über eine bevorzugte Verkehrsführung betreffen. In einer Ausführungsform kann die Steuervorrichtung 160 eine vollständig autonome Steuerung des Kraftfahrzeugs 105 von einer aktuellen Position zu einer vorbestimmten Zielposition durchführen.

Es wird vorgeschlagen, dass seitens der zentralen Einrichtung 120 das Überprüfen von Informationen von zweiten Kacheln 145 einer Sammlung 150 sowie gegebenenfalls das Verwerfen von zweiten Kacheln 145 auf eine bestimmte Weise erfolgt, die das Übernehmen von Informationen verhindert, die mit als fehlerhaft befundenen Informationen korreliert sind.

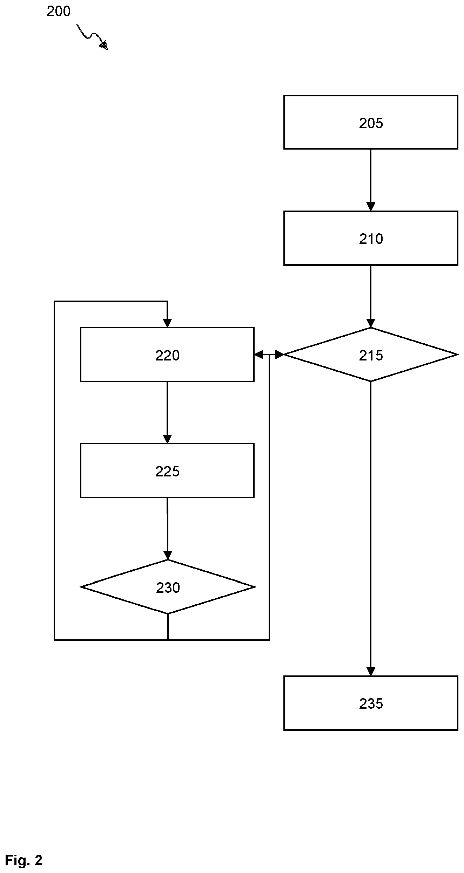

Figur 2 zeigt ein Ablaufdiagramm eines Verfahrens 200 zum Aktualisieren einer geographischen Karte 110. Das Verfahren 200 ist insbesondere zum Ablaufen seitens der zentralen Einrichtung 120, bevorzugt auf der Verarbeitungseinrichtung 125 eingerichtet. Dazu kann das Verfahren 200 ganz oder teilweise in Form eines Computerprogrammprodukts vorliegen und die Verarbeitungseinrichtung 125 kann einen programmierbaren Mikrocomputer oder Mikrocontroller umfassen.

In weiteren Ausführungsformen kann das Verfahren 200 auch beispielsweise an Bord des Kraftfahrzeugs 105 oder seitens des Dienstleisters 140 durchgeführt werden. In allen Fällen wird von einer gruppierten Lieferung der zweiten Kacheln 145 ausgegangen, also dass eine Anzahl zweiter Kacheln 145, deren Informationen zusammengehören, gemeinsam als Sammlung 150 bereitgestellt wird.

In einem Schritt 205 werden die ersten Kacheln 115 der Karte 110 bereitgestellt. Die ersten Kacheln 115 der Karte 110 umfassen bevorzugt Informationen, die bevorzugt miteinander konsistent und insbesondere widerspruchsfrei sind. Dieser Schritt wird üblicherweise nur einmalig zur Initialisierung der zentralen Einrichtung 120 durchgeführt. In einem Schritt 210 wird eine Sammlung 150 von zweiten Kacheln 145 vom Dienstleister 140 empfangen. Dieser Schritt kann ereignisgesteuert oder zeitgesteuert erfolgen. Die Informationen der zweiten Kacheln 145 sind bevorzugt ebenfalls miteinander konsistent und insbesondere widerspruchsfrei.

In einem nachfolgenden Schritt 215 werden die empfangenen zweiten Kacheln 145 einzeln oder in Gruppen auf Fehlerfreiheit ihrer Informationen überprüft. Wird für eine der zweiten Kacheln 145 ein Fehler bestimmt, so verzweigt das Verfahren 200 zu einem Schritt 220, in welchem die betroffene zweite Kachel 145 verworfen wird. Optional kann eine Nachricht an den Dienstleister 140 bereitgestellt werden, welche die verworfene zweite Kachel 145 sowie bevorzugt den Grund des Verwerfens umfasst. Der Dienstleister 140 kann dann die fehlerhaften Informationen nachbessern und alle verworfenen zweiten Kacheln 145 nachliefern, beispielsweise in einer nachfolgenden Sammlung 150.

Anschließend können in einem Schritt zweite Kacheln 145 bestimmt werden, deren zugeordneten geographischen Gebiete unmittelbar an das geographische Gebiet der verworfenen zweiten Kachel 145 angrenzen. Bevorzugt werden hierfür nur solche zweiten Kacheln 145 berücksichtigt, die nicht schon verworfen wurden. Wird in einem Schritt 230 bestimmt, dass keine solche zweite Kachel 145 zu finden ist, kann das Verfahren 200 zum Schritt 215 zurückverzweigen, wo die nächste zweite Kachel 145 auf Korrektheit ihrer Informationen überprüft werden kann. Werden im Schritt 225 jedoch eine oder mehrere zweite Kacheln 145 gefunden, so können die Schritte 220 bis 230 rekursiv für jede gefundene zweite Kachel 145 durchgeführt werden. Dadurch können alle zweiten Kacheln 145 verworfen werden, die mit einer fehlerhaften - oder verworfenen - zweiten Kachel 145 in einer geographischen Nachbarkeitsbeziehung stehen. Die Zahl der zweiten Kacheln 145 ist üblicherweise wesentlich kleiner als die Zahl der ersten Kacheln 115 der Karte 110, typischerweise um mehrere Größenordnungen. Der rekursive Teil des Verfahrens 200 terminiert daher üblicherweise nach nur wenigen Durchläufen. Selbstverständlich kann das Verfahren 200 in äquivalenter Weise iterativ aufgebaut werden, da für jedes rekursive Verfahren ein gleichwertiges iteratives Verfahren bestimmt werden kann und umgekehrt.

Sind im Schritt 215 keine weiteren zweiten Kacheln 145 der Sammlung 150 mehr zu überprüfen, können die verbleibenden, unverworfenen zweiten Kacheln 145 in einem Schritt 235 zur Aktualisierung der Karte 110 verwendet werden. Dazu können die Informationen der zweiten Kacheln 145 in die jeweils korrespondierenden ersten Kacheln 115 übernommen werden. Es ist zu beachten, dass die zweiten Kacheln 145 nur die bezüglich eines vorbestimmten Standes (einer vorbestimmten Version) geänderten Informationen oder alle Informationen einer ersten Kachel 115 enthalten können. Optional kann eine Rückmeldung an die Quelle der Sammlung 150 über eine verworfene zweite Kachel 145 erfolgen. Die Quelle kann insbesondere zur Behebung eines bezüglich der zweiten Kachel 145 aufgetretenen Fehlers aufgefordert werden.

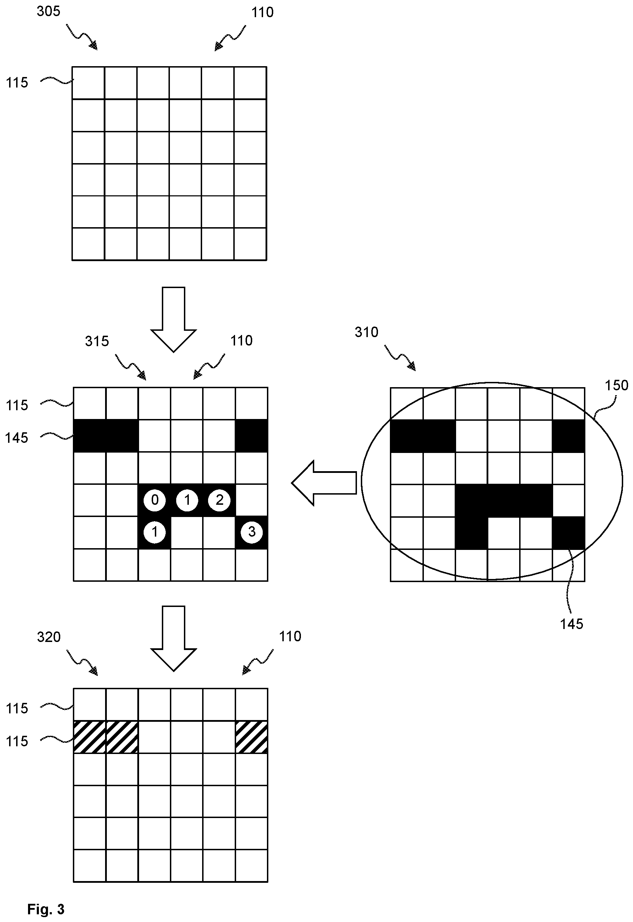

Figur 3 zeigt eine schematische Aktualisierung einer Karte 110. Eine erste Darstellung 305 zeigt die Karte 110 mit ersten Kacheln 115 in einer ersten Version, eine zweite Darstellung 310 eine Sammlung 150 von zweiten Kacheln 145 in einer zweiten, höheren Version, eine dritte Darstellung 315 eine Überlagerung der zweiten Kacheln 145 mit den ersten Kacheln 115 der Karte 110 und eine vierte Darstellung 320 die resultierende Karte 110 nach dem Aktualisieren.

In allen Darstellungen sind die Kacheln 115, 145 so angeordnet, wie ihre zugeordneten geographischen Gebiete zueinander liegen. In der vorliegenden Ausführungsform überlappen sich benachbarte Kacheln 115, 145 nicht. Einige der zweiten Kacheln 145 stehen zueinander in topographischer Nachbarschaftsbeziehung, andere sind voneinander getrennt.

In der Überlagerung der dritten Darstellung 315 wird für die mit "0" bezeichnete zweite Kachel 145 ein Fehler bestimmt. Ausgehend von dieser zweiten Kachel 145 werden alle benachbarten zweiten Kacheln 145 bestimmt. Diese zweiten Kacheln 145 sind in der Darstellung von Figur 3 mit "1" gekennzeichnet. Die rekursive Suche nach benachbarten zweiten Kacheln 145 wird fortgeführt und ergibt eine weitere zweite Kachel 145, die in Figur 3 mit "2" bezeichnet ist. Die Kacheln 115, 145 sind schachbrettartig angeordnet, sodass zwei diagonal zueinander versetzte Kacheln 115, 145 als benachbart oder als nicht benachbart definiert werden können. In erstem Fall kann bei einer folgenden Suche noch die mit "3" bezeichnete zweite Kachel 145 bestimmt werden. Werden keine weiteren zweiten Kacheln 145 gefunden, ist die Suche beendet. Die bei der Suche bestimmten zweiten Kacheln 145 können verworfen werden, sodass die ihnen zugeordneten Informationen die der zugeordneten ersten Kacheln 115 nicht verändern.

Die anderen zweiten Kacheln 145 in Figur 3 sind zu keiner zweiten Kachel 145 benachbart, die entweder selbst einen Fehler aufweist oder in (unmittelbarer oder mittelbarer) Nachbarschaft zu einer fehlerhaften zweiten Kachel 145 liegt. Diese Kacheln 145 bleiben daher unverworfen und die ihnen zugeordneten Informationen können zur Aktualisierung der jeweils zugeordneten ersten Kacheln 115 verwendet werden.

In einem anschaulichen Beispiel können die verworfenen zweiten Kacheln 145 ein gemeinsames Objekt beinhalten, beispielsweise eine Straße oder eine geographische Zone, etwa in einer ersten Stadt in einem ersten Land. Die anderen zweiten Kacheln 145 können geographischen Gebieten einer anderen Stadt des gleichen oder eines zweiten Landes zugeordnet sein. Solange eine zweite Kachel 145 in der dargestellten Topographie der Karte 110 disjunkt von den verworfenen bzw. zu verwerfenden zweiten Kacheln 145 ist, es also keinen Pfad von zueinander benachbarten zweiten Kacheln 145 zwischen der zweiten Kachel 145 und einer verworfenen zweiten Kachel 145 gibt, muss die erstgenannte zweite Kachel 145 sie nicht verworfen werden und die ihr zugeordneten Informationen können zur Aktualisierung der zugeordneten ersten Kachel 115 übernommen werden.

In der vierten Darstellung 320 sind diejenigen ersten Kacheln 115 der Karte 110, die aus der ersten Darstellung 305 unverändert übernommen wurden, also die erste Version tragen, hell dargestellt, während die ersten Kacheln 115, die auf der Basis von Informationen der zweiten Kacheln 145 aktualisiert wurden, mithin die zweite Version tragen, schraffiert dargestellt sind. Die beschriebene Vorgehensweise kann mit einer weiteren Sammlung 150 von zweiten Kacheln 145 einer dritten Version wiederholt werden und so fort.

### Bezugszeichen

- 100: System
- 105: Kraftfahrzeug
- 110: Karte
- 115: erste Kachel
- 120: zentrale Einrichtung
- 125: Verarbeitungseinrichtung
- 130: Datenspeicher
- 135: Schnittstelle zur drahtlosen Kommunikation
- 140: Dienstleister
- 145: zweite Kachel
- 150: Sammlung
- 155: Teilkarte
- 160: Steuervorrichtung
- 165: Schnittstelle
- 170: Positioniereinrichtung

- 200: Verfahren
- 205: Bereitstellen erste Kacheln
- 210: Empfangen Sammlung zweite Kacheln
- 215: Fehler?
- 220: Kachel verwerfen
- 225: unverworfenen zweite Nachbarkacheln bestimmen
- 230: gefunden?
- 235: Informationen restlicher zweite Kacheln übernehmen

- 305: erste Darstellung
- 310: zweite Darstellung
- 315: dritte Darstellung
- 320: vierte Darstellung

## Patentansprüche

1. Verfahren (200) zum Aktualisieren einer geographischen Karte (110), die eine Vielzahl erster Kacheln (115) umfasst, wobei jede erste Kachel (115) Informationen bezüglich eines vorbestimmten geographischen Gebiets der Karte (110) enthält; und wobei das Verfahren (200) folgende Schritte umfasst:
- Erfassen (210) einer Sammlung (150) von zweiten Kacheln (145), wobei jeder zweiten Kachel (145) eine erste Kachel (115) zugeordnet ist und die zweite Kachel (145) geänderte Informationen bezüglich des geographischen Gebiets der zugeordneten ersten Kachel (115) enthält;
- Bestimmen (215) einer zweiten Kachel (145), die fehlerhafte Informationen enthält;
- Verwerfen (220) der bestimmten zweiten Kachel (145); und
- Aktualisieren (235) der geographischen Karte (110) auf der Basis von Informationen verbleibender zweiter Kacheln (145),
**dadurch gekennzeichnet, dass**
- vor dem Aktualisieren (235) rekursiv alle zweiten Kacheln (145) verworfen (220) werden, deren geographische Gebiete an das geographische Gebiet einer verworfenen zweiten Kachel (145) angrenzen.

2. Verfahren (200) nach Anspruch 1, wobei das geographische Gebiet einer zweiten Kachel (145) mit dem geographischen Gebiet der zugeordneten ersten Kachel (115) übereinstimmt.

3. Verfahren (200) nach Anspruch 1 oder 2, wobei ein Hinweis auf eine verworfene zweite Kachel (145) bereitgestellt (235) wird.

4. Verfahren (200) nach einem der vorangehenden Ansprüche, wobei die geographischen Gebiete der zweiten Kacheln (145) schachbrettartig angeordnet sind und zwei diagonal versetzte zweite Kacheln (145) als aneinander angrenzend angesehen werden.

5. Verfahren (200) nach einem der vorangehenden Ansprüche, wobei die einer zweiten Kachel (145) zugeordneten Informationen lediglich Änderungen betreffen.

6. Verfahren (200) nach einem der vorangehenden Ansprüche, wobei die einer zweiten Kachel (145) zugeordneten Informationen alle vorhandenen Informationen des zugeordneten geographischen Gebiets betreffen.

7. Verfahren (200) nach einem der vorangehenden Ansprüche, wobei fehlerhafte Informationen der zweiten Kachel (145) auf der Basis einer syntaktischen Struktur der Informationen, eines Formats der zweiten Kachel (145), einer Relation zu Informationen einer angrenzenden ersten oder zweiten Kachel (145), eines Vergleichs mit der Realität oder mittels Vergleich mit Informationen einer anderen Quelle bestimmt werden.

8. Verfahren (200) nach einem der vorangehenden Ansprüche, wobei Informationen eines Umfelds einer vorbestimmten geographischen Position abgetastet und mit Informationen einer die Position umfassenden ersten Kachel (115) verglichen wird.

9. Verfahren (200) nach Anspruch 8, wobei auf der Basis der Informationen der ersten Kachel (115) und den abgetasteten Informationen Steuersignale für ein Kraftfahrzeug (105) bereitgestellt werden.

10. Vorrichtung (120) zur Aktualisierung einer geographischen Karte (110), die eine Vielzahl erster Kacheln (115) umfasst, wobei jede erste Kachel (115) Informationen bezüglich eines vorbestimmten geographischen Gebiets der Karte (110) enthält; und wobei die Vorrichtung folgendes umfasst:
- eine Schnittstelle (135) zur Erfassung einer Sammlung (150) von zweiten Kacheln (145), wobei jeder zweiten Kachel (145) eine erste Kachel (115) zugeordnet ist und die zweite Kachel (145) geänderte Informationen bezüglich des geographischen Gebiets der zugeordneten ersten Kachel (115) enthält;
- eine Verarbeitungseinrichtung (125), die dazu eingerichtet ist, eine zweite Kachel (145), die fehlerhafte Informationen enthält, zu bestimmen, die bestimmte zweite Kachel (145) zu verwerfen; und die geographische Karte (110) auf der Basis von Informationen verbleibender zweiter Kacheln (145) zu aktualisieren,
**dadurch gekennzeichnet, dass**
- die Verarbeitungseinrichtung (125) ferner dazu eingerichtet ist, vor dem Aktualisieren rekursiv alle zweiten Kacheln (145) zu verwerfen, deren geographische Gebiete an das geographische Gebiet einer verworfenen zweiten Kachel (145) angrenzen.

## Claims

1. Method (200) for updating a geographical map (110) comprising a multiplicity of first tiles (115), each first tile (115) containing information regarding a predetermined geographical area of the map (110); and the method (200) comprising the following steps:
- detecting (210) a collection (150) of second tiles (145), each second tile (145) having an associated first tile (115) and the second tile (145) containing changed information regarding the geographical area of the associated first tile (115) ;
- determining (215) a second tile (145) that contains erroneous information;
- rejecting (220) the determined second tile (145); and
- updating (235) the geographical map (110) on the basis of information from remaining second tiles (145),
**characterized in that**
- prior to the updating (235), all second tiles (145) whose geographical areas adjoin the geographical area of a rejected second tile (145) are recursively rejected (220).

2. Method (200) according to Claim 1, wherein the geographical area of a second tile (145) matches the geographical area of the associated first tile (115).

3. Method (200) according to Claim 1 or 2, wherein advice of a rejected second tile (145) is provided (235) .

4. Method (200) according to one of the preceding claims, wherein the geographical areas of the second tiles (145) are arranged in a chequered manner and two diagonally offset second tiles (145) are regarded as adjoining one another.

5. Method (200) according to one of the preceding claims, wherein the information associated with a second tile (145) merely relates to changes.

6. Method (200) according to one of the preceding claims, wherein the information associated with a second tile (145) relates to all available information from the associated geographical area.

7. Method (200) according to one of the preceding claims, wherein erroneous information from the second tile (145) is determined on the basis of a syntactic structure of the information, a format of the second tile (145), a relation to information from an adjoining first or second tile (145), a comparison with reality or by means of comparison with information from another source.

8. Method (200) according to one of the preceding claims, wherein information from surroundings of a predetermined geographical position is scanned and compared with information from a first tile (115) that covers the position.

9. Method (200) according to Claim 8, wherein the information from the first tile (115) and the scanned information are taken as a basis for providing control signals for a motor vehicle (105).

10. Apparatus (120) for updating a geographical map (110) comprising a multiplicity of first tiles (115), each first tile (115) containing information regarding a predetermined geographical area of the map (110); and the apparatus comprising the following:
- an interface (135) for detecting a collection (150) of second tiles (145), each second tile (145) having an associated first tile (115) and the second tile (145) containing changed information regarding the geographical area of the associated first tile (115);
- a processing device (125) designed to determine a second tile (145) that contains erroneous information, to reject the determined second tile (145); and to update the geographical map (110) on the basis of information from remaining second tiles (145),
**characterized in that**
- the processing device (125) is further designed so as, prior to the updating, to recursively reject all second tiles (145) whose geographical areas adjoin the geographical area of a rejected second tile (145).

## Revendications

1. Procédé (200) pour actualiser une carte géographique (110), laquelle comporte une pluralité de premiers carreaux (115), chaque premier carreau (115) contenant des informations relatives à une région géographique prédéterminée de la carte (110) ; et le procédé (200) comprenant les étapes suivantes :
- acquisition (210) d'une collection (150) de deuxièmes carreaux (145), un premier carreau (115) étant associé à chaque deuxième carreau (145) et le deuxième carreau (145) contenant des informations modifiées concernant la région géographique du premier carreau (115) associé ;
- détermination (215) d'un deuxième carreau (145) qui contient des informations erronées ;
- rejet (220) du deuxième carreau (145) déterminé ; et
- actualisation (235) de la carte géographique (110) sur la base des informations des deuxièmes carreaux (145) restants,
**caractérisé en ce que**
- avant l'actualisation (235), tous les deuxièmes carreaux (145) dont les régions géographiques sont adjacentes d'un deuxième carreau (145) rejeté sont rejetés (220) de manière récursive.

2. Procédé (200) selon la revendication 1, la région géographique d'un deuxième carreau (145) coïncidant avec la région géographique du premier carreau (115) associé.

3. Procédé (200) selon la revendication 1 ou 2, une indication à propos d'un deuxième carreau (145) rejeté étant fournie (235).

4. Procédé (200) selon l'une des revendications précédentes, la région géographique des deuxièmes carreaux (145) étant disposée en échiquier et deux deuxièmes carreaux (145) décalés en diagonale étant considérés comme mutuellement adjacents.

5. Procédé (200) selon l'une des revendications précédentes, les informations associées à un deuxième carreau (145) concernant des modifications.

6. Procédé (200) selon l'une des revendications précédentes, les informations associées à un deuxième carreau (145) concernant toutes les informations présentes de la région géographique associée.

7. Procédé (200) selon l'une des revendications précédentes, les informations erronées du deuxième carreau (145) étant déterminées sur la base d'une structure syntaxique des informations, d'un format du deuxième carreau (145), d'une relation avec les informations d'un premier ou d'un deuxième carreau (145) adjacent, d'une comparaison avec la réalité ou au moyen d'une comparaison avec des informations d'une autre source.

8. Procédé (200) selon l'une des revendications précédentes, les informations d'un environnement d'une position géographique prédéterminée étant explorées et comparées avec des informations d'un premier carreau (115) comprenant la position.

9. Procédé (200) selon la revendication 8, des signaux de commande pour un véhicule automobile (105) étant fournis sur la base des informations du premier carreau (115) et des informations explorées.

10. Arrangement (120) pour actualiser une carte géographique (110), laquelle comporte une pluralité de premiers carreaux (115), chaque premier carreau (115) contenant des informations relatives à une région géographique prédéterminée de la carte (110) ; et le dispositif comprenant :
- une interface (135) servant à l'acquisition d'une collection (150) de deuxièmes carreaux (145), un premier carreau (115) étant associé à chaque deuxième carreau (145) et le deuxième carreau (145) contenant des informations modifiées concernant la région géographique du premier carreau (115) associé ;
- un dispositif de traitement (125), qui est conçu pour déterminer un deuxième carreau (145) qui contient des informations erronées, rejeter le deuxième carreau (145) déterminé ; et pour actualiser la carte géographique (110) sur la base des informations des deuxièmes carreaux (145) restants,
**caractérisé en ce que**
- le dispositif de traitement (125) est en outre conçu pour, avant l'actualisation, rejeter de manière récursive tous les deuxièmes carreaux (145) dont les régions géographiques sont adjacentes d'un deuxième carreau (145) rejeté.
